Europäisches Patentamt

European Patent Office

Office européen des brevets

(11) Veröffentlichungsnummer: **0 034 638**
A1

# (12) EUROPÄISCHE PATENTANMELDUNG

(21) Anmeldenummer: 80100853.3

(22) Anmeldetag: 21.02.80

(51) Int. Cl.³: **F 23 N 5/24**
G 01 M 3/22, G 01 M 3/18

(43) Veröffentlichungstag der Anmeldung:
02.09.81 Patentblatt 81 35

(84) Benannte Vertragsstaaten:
AT BE CH DE FR GB LU NL SE

(71) Anmelder: G. Kromschröder Aktiengesellschaft
Jahnplatz 6
D-4500 Osnabrück(DE)

(72) Erfinder: Brüggemann, Christa
Friedensstrasse 2
D-4450 Bramsche 8(DE)

(74) Vertreter: Weisse, Jürgen, Dipl.-Phys. et al,
Bökenbusch 41 Postfach 11 03 86
D-5620 Velbert 11-Langenberg(DE)

(54) Gasbrenneranlage.

(57) Zur Überwachung der Dichtheit eines Absperrventils bei einer Gasbrenneranlage ist stromab von dem Absperrventil 16 ein auf Gas ansprechender Gassensor 20 angeordnet. Ein Signalgeber 22 spricht auf das Absperren des Absperrventils 16 an. Die Signale des Gassensors 20 und des Signalgebers 22 sind in einer Steuerschaltung 24 so verknüpft, daß ein Störsignal erzeugt wird, wenn der Gassensor 20 bei abgesperrtem Absperrventil 16 das Auftreten von Gas signalisiert.

EP 0 034 638 A1

## Gasbrenneranlage

Die Erfindung betrifft eine Gasbrenneranlage mit einem Absperrventil und Mitteln zur Überwachung der Dichtheit dieses Absperrventils.

Bei bekannten Gasbrenneranlagen sind als Mittel zur Überwachung der Dichtheit zwei hintereinandergeschaltete Absperrventile vorgesehen sowie Einrichtungen, welche bei geschlossenen Absperrventilen den Druckverlauf in dem zwischen den beiden Absperrventilen gebildeten Raum überwachen.

Bei einer bekannten Gasbrenneranlage dieser Art (DE-PS 1 912 622) ist an den Raum zwischen den beiden Absperrventilen eine Saugeinrichtung angeschlossen. Ein Druckfühler spricht auf Unterdruck an und zeigt eine Undichtigkeit an, wenn ein vorgeschriebener Unterdruck innerhalb einer vorgegebenen Zeit nicht erreicht wird oder nach Absaugung innerhalb einer vorgegebenen Zeit ein vorgeschriebener Unterdruck zu Atmosphärendruck hin überschritten wird.

Andere ähnliche Anordnungen zeigen die DE-PS 1 629 867 und die DE-AS 1 227 182.

Solche Überwachungsmittel sind aufwendig und liefern ein Störsignal erst nach einer relativ langen Schließzeit der Absperrventile.

Der Erfindung liegt die Aufgabe zugrunde, mit einfachen Mitteln und ohne wesentliche Verzögerung ein Absperrventil bei einer Gasbrenneranlage auf Dichtheit zu kontrollieren.

Erfindungsgemäß wird diese Aufgabe dadurch gelöst, daß

(a) stromab von dem Absperrventil ein auf Gas ansprechender Gassensor angeordnet ist und

(b) an dem Absperrventil ein auf das Absperren des Absperrventils ansprechender Signalgeber vorgesehen ist und

(c) die Signale des Gassensors und des Signalgebers in einer Steuerschaltung so verknüpft sind, daß ein Störsignal erzeugt wird, wenn der Gassensor bei abgesperretem Absperrventil das Aufteten von Gas signalisiert.

Gassensoren sind an sich in verschiedener Form bekannt.

Ein bekannter Sensor arbeitet beispielsweise mit katalytischer Verbrennung des Gases. Er enthält in einer Brückenschaltung eine Meßwendel, die zur katalytischen Verbrennung von Gas präpariert ist, und eine unempfindliche Vergleichswendel. Bei Anwesenheit von Gas erwärmt sich die Meßwendel infolge der katalytischen Verbrennung, verändert dementsprechend ihren elektrischen Widerstand und verstimmt so die Brückenschaltung.

Ein anderer bekannter Gassensor nutzt die Tatsache aus, daß Gas eine andere Wärmeleitfähigkeit besitzt als Luft. In einer Brückenschaltung sind in einem Paar von gegenüberliegenden Zweigen Meßwendeln, die in einer Meßkammer von dem Meßgasgemisch umspült werden, und in dem anderen Paar von gegenüberliegenden Zweigen Vergleichswendeln angeordnet. Die Vergleichswendeln sitzen in einer Vergleichskammer, die z.B. mit reiner Luft gefüllt ist. Meß- und Vergleichswendeln sind durch den über die Brückenschaltung fließenden Strom schwach aufgeheizt. Sie geben Wärme durch Wärmeleitung ab. Die Wärmeabgabe und damit die Temperatur der Meßwendeln hängt von der Wärmeleitfähigkeit des Meßgases ab. Wenn das Meßgas eine von Luft verschiedene Wärmeleitfähigkeit besitzt, weil durch ein undichtes Absperrventil Gas zu dem Gassensor gelangt, ändert sich die Temperatur der Meßwendeln. Die Brückenschaltung wird verstimmt und liefert ein Signal.

Schließlich sind Gassensoren bekannt, die mit Chemosorption an Halbleitern, z.B. Metalloxiden, arbeiten. Dabei lagern sich an der Oberfläche des Sensors je nach seiner Temperatur und der Konzentration des Gases Moleküle des Gases an. Dadurch verändern sie den elektrischen Widerstand des Halbleiters, was zur Signalerzeugung ausgenutzt werden kann.

Solche und andere Gassensoren können für die Erfindung benutzt werden.

Ein Ausführungsbeispiel der Erfindung ist nachstehend unter Bezugnahme auf die zugehörige Zeichnung näher erläutert, die ein vereinfachtes Schaltbild einer Gasbrenneranlage zeigt.

In einer Gaszuleitung 10 strömt Gas durch ein Filter 12, einen Druckminderer 14 und ein Absperrventil 16 zu einem Brenner 18. Es ist nur ein einziges Absperrventil 16 vorgesehen. Stromab von diesem Absperrventil 16 ist in der Leitung 10 ein Gassensor 20 vorgesehen, der auf das Vorhandensein von Gas oder einem dem Gas zugesetzten Odoriermittel anspricht und ein Signal liefert. Es ist weiterhin ein Signalgeber 22 vorgesehen, der auf den Schaltzustand des Absperrventils 16 anspricht und ein entsprechendes Signal abgibt.

Die Signale des Gassensors 20 und des Signalgebers 22 werden einer Steuerschaltung 24 zugeführt, wie durch die getrichelten Linien 26 und 28 angedeutet ist. Dort werden die Signale so verknüpft, daß ein Störsignal erzeugt wird, wenn der Gassensor 20 bei abgesperrtem Absperrventil 16 das Auftreten von Gas signalisiert. Ordnet man dem geschlossenen Absperrventil 16 das Signal "L" (logisch eins) des Signalgebers 22 zu und dem Auftreten von Gas am Gassensor 20 ebenfalls das Signal "L", so ist die Verknüpfung eine einfache UND-Verknüpfung.

Das so erhaltene Störsignal löst einen z.B. akustischen Alarm aus, wie durch die Alarmvorrichtung 30 angedeutet ist. Außerdem wird, wie durch die gestrichelte Linie 32 angedeutet ist, jede weitere Inbetriebnahme des Brenners 18, insbesondere jede Zündung unterbunden. Es wird so sichergestellt, daß nicht unverbranntes Gas, das sich ansammelt, bei einer Zündung explodiert.

Die Steuerschaltung hat im übrigen in bekannter und daher nicht näher dargestellter Weise die Funktion, den Brenner im normalen Betrieb etwa in Abhängigkeit von einem Temperaturfühler ein- und auszuschalten.

Aus Sicherheitsgründen kann zusätzlich zu dem Absperrventil 16 ein zweites, damit in Reihe liegendes
Absperrventil vorgesehen werden. Dieses zweite
Absperrventil hat dabei aber keinerlei Funktion im
Rahmen der Dichtheitsprüfung.

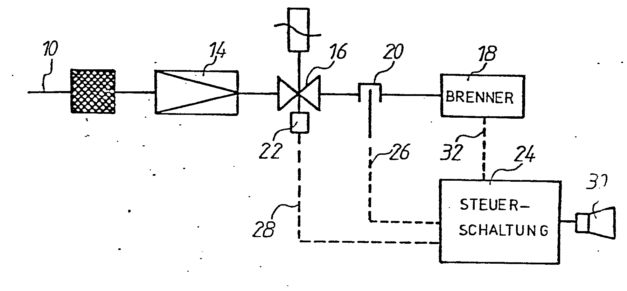

Patentanspruch

Gasbrenneranlage mit einem Absperrventil und Mitteln zur Überwachung der Dichtheit dieses Absperrventils, dadurch gekennzeichnet, daß

(a)    stromab von dem Absperrventil (16) ein auf Gas ansprechender Gassensor (20) angeordnet ist und

(b)    an dem Absperrventil (16) ein auf das Absperren des Absperrventils (16) ansprechender Signalgeber (22) vorgesehen ist und

(c)    die Signale des Gassensors (20) und des Signalgebers (22) in einer Steuerschaltung (24) so verknüpft sind, daß ein Störsignal erzeugt wird, wenn der Gassensor (20) bei abgesperrtem Absperrventil (16) das Auftreten von Gas signalisiert.

BRENNER
STEUER-
SCHALTUNG

**0034638**

Nummer der Anmeldung

**EP 80 10 0853**

Europäisches
Patentamt

**EUROPÄISCHER RECHERCHENBERICHT**

| Kategorie | Kennzeichnung des Dokuments mit Angabe soweit erforderlich, der maßgeblichen Teile | betrifft Anspruch |
|---|---|---|
| | FR - A - 1 473 322 (R. ATTIAS) <br> * Seite 1, rechte Spalte, Absatz 2; Seite 2, linke Spalte, Absatz 1; Figur * | Einziger |
| | DE - A - 2 158 901 (AG HABEMA) <br> * Seite 8, Absätze 2,3; Seite 9, Absätze 1,2; Figuren 5,6 * | Einziger |
| | DE - C - 906 081 (G. HEGWEIN) <br> * Seite 2, Zeilen 107-126; Seite 3, Zeilen 1-43; Figur 2 * | Einziger |
| A | FR - A - 469 364 (J. HEUSSLER) <br> * Seite 1, Zeilen 51-58; Figur 1 * | Einziger |
| A | FR - A - 2 391 418 (G. PAGANI) <br> * Anspruch 1; Figur * | Einziger |

**EINSCHLÄGIGE DOKUMENTE**

**KLASSIFIKATION DER ANMELDUNG** (Int Cl.³)

F 23 N 5/24
G 01 M 3/22
3/18

**RECHERCHIERTE SACHGEBIETE** (Int. Cl.³)

G 01 M 3/00
3/02
3/04
3/20
3/22
F 17 D 5/00
5/02
5/06
F 16 K 37/00
F 23 N 5/24
G 01 M 3/16
3/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E kollidierende Anmeldung
D in der Anmeldung angeführtes Dokument
L aus andern Gründen angeführtes Dokument
& Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 28-10-1980 | VAN ASSCHE |

EPA form 1503.1 06.78